# EUROPEAN PATENT APPLICATION

(11) **EP 3 477 955 A1**
(43) Date of publication of application: **01.05.2019**
(21) Application number: 18201804.4
(22) Date of filing: 22.10.2018
(51) Int. Cl.: H04N 21/41, H04N 21/422, H04N 21/4223, H04N 21/436, H04N 21/44, H04N 21/442, H04N 7/18, H04N 21/81, G08B 13/196, G06K 9/62

(54) **INFORMATION SUBSCRIPTION METHOD AND DEVICE**

(30) Priority: 30.10.2017 CN 201711052280
(71) Applicant: Beijing Xiaomi Mobile Software Co., Ltd., Beijing 100085 (CN)
(72) Inventor: CHEN, Zhijun, Beijing, Beijing 100085 (CN); ZHANG, Li, Beijing, Beijing 100085 (CN)
(74) Representative: dompatent von Kreisler Selting Werner - Partnerschaft von Patent- und Rechtsanwälten mbB

(57) **Abstract**

The present disclosure relates to an information subscription method and device. The method includes that: event information for representing an event occurring in a space where a monitoring device is located is acquired (S11), an image captured by the monitoring device and corresponding to the event information is acquired when the event information meets a preset condition (S12), and the image is sent to a first terminal corresponding to the monitoring device (S13). According to the information subscription method and device, the image captured by the monitoring device may be sent to the first terminal corresponding to the monitoring device under the preset condition, so that a user may timely and accurately know about the event occurring in the space where the monitoring device is located.

## Description

### BACKGROUND

At present, with improvement of safety awareness of people, monitoring device may be mounted in the vicinity of inhabitants to record and monitor daily life. However, a user may browse an image captured by monitoring device with a lag, and cannot timely know about an event occurring in a space where the monitoring device is located.

### SUMMARY

Accordingly, the present invention provides an information subscription method and device, in accordance with claims which follow.

According to a first aspect, the invention relates to an information subscription method, comprising: acquiring event information for representing an event occurring in a space where a monitoring device is located; when the event information meets a preset condition, acquiring an image captured by the monitoring device and corresponding to the event information; and sending the image to a first terminal corresponding to the monitoring device.

The technical solutions provided in the first aspect may achieve the following beneficial effects. According to the information subscription method and device of the present disclosure, the event information for representing the event occurring in the space where the monitoring device is located is acquired, the image captured by the monitoring device and corresponding to the event information is acquired when the event information meets the preset condition, and the image is sent to the first terminal corresponding to the terminal device; and in such a manner, the image captured by the monitoring device may be sent to the first terminal corresponding to the monitoring device under the preset condition, so that a user may timely and accurately know about the event occurring in the space where the monitoring device is located.

According to an exemplary embodiment, the preset condition is that an information type corresponding to the event information is a preset information type.

According to an exemplary embodiment, the preset condition is that a level type corresponding to the event information is equal to or greater than a preset level threshold value.

According to an exemplary embodiment, the acquiring event information for representing an event occurring in a space where a monitoring device is located comprises: acquiring first event information generated by an intelligent terminal device according to triggering of the event, and determining the first event information as the event information.

According to an exemplary embodiment, the acquiring event information for representing an event occurring in a space where a monitoring device is located comprises: acquiring the first event information generated by an intelligent terminal device according to triggering of the event; performing face recognition on the image captured by the monitoring device, and determining an event execution body corresponding to the first event information; and generating second event information according to the first event information and the event execution body, and determining the second event information as the event information.

According to an exemplary embodiment, the acquiring event information for representing an event occurring in a space where a monitoring device is located comprises: when a change in the image captured by the monitoring device is detected, analyzing the image to obtain the event information according to a pretrained event classifier.

According to an exemplary embodiment, the method further comprises when the first event information is acquired, determining a position of the intelligent terminal device corresponding to the first event information; and regulating a capturing orientation of the monitoring device according to the position of the intelligent terminal device to locate the intelligent terminal device within a capturing region of the monitoring device.

According to a second aspect, there is provided an information subscription device, comprising: an event information acquisition module configured to acquire event information for representing an event occurring in a space where a monitoring device is located; an image acquisition module configured to, when the event information meets a preset condition, acquire an image captured by the monitoring device and corresponding to the event information; and an image sending module configured to send the image to a first terminal corresponding to the monitoring device.

The technical solutions provided in the second aspect may achieve the following beneficial effects. According to the information subscription method and device of the present disclosure, the event information for representing the event occurring in the space where the monitoring device is located is acquired, the image captured by the monitoring device and corresponding to the event information is acquired when the event information meets the preset condition, and the image is sent to the first terminal corresponding to the terminal device; and in such a manner, the image captured by the monitoring device may be sent to the first terminal corresponding to the monitoring device under the preset condition, so that a user may timely and accurately know about the event occurring in the space where the monitoring device is located.

According to an exemplary embodiment, the preset condition is that an information type corresponding to the event information is a preset information type.

According to an exemplary embodiment, the preset condition is that a level type corresponding to the event information is equal to or greater than a preset level threshold value.

According to an exemplary embodiment, the event information acquisition module is configured to: acquire first event information generated by an intelligent terminal device according to triggering of the event, and determine the first event information as the event information, and the device further comprises: a position determination module configured to, when the first event information is acquired, determine a position of the intelligent terminal device corresponding to the first event information; and a regulation module configured to regulate a capturing orientation of the monitoring device according to the position of the intelligent terminal device to locate the intelligent terminal device within a capturing region of the monitoring device.

According to an exemplary embodiment, the event information acquisition module is configured to: acquire the first event information generated by an intelligent terminal device according to triggering of the event; perform face recognition on the image captured by the monitoring device, and determine an event execution body corresponding to the first event information; and generate second event information according to the first event information and the event execution body, and determine the second event information as the event information, or wherein the event information acquisition module is configured to when a change in the image captured by the monitoring device is detected, analyze the image to obtain the event information according to a pretrained event classifier.

According to a third aspect, there is provided an information subscription device, comprising: a processor; and a memory configured to store instructions executable for the processor, wherein the processor is configured to execute the method according to the first aspect.

The technical solutions provided in the third aspect may achieve the following beneficial effects. According to the information subscription method and device of the present disclosure, the event information for representing the event occurring in the space where the monitoring device is located is acquired, the image captured by the monitoring device and corresponding to the event information is acquired when the event information meets the preset condition, and the image is sent to the first terminal corresponding to the terminal device; and in such a manner, the image captured by the monitoring device may be sent to the first terminal corresponding to the monitoring device under the preset condition, so that a user may timely and accurately know about the event occurring in the space where the monitoring device is located.

In one particular embodiment, the steps of the information subscription method are determined by computer program instructions.

Consequently, according to a third aspect, the invention is also directed to a computer program for executing the steps of an information subscription method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, in conjunction with the description, serve to explain the principles of the present disclosure.
FIG. 1 is a flow chart illustrating an information subscription method according to an exemplary embodiment;
FIG. 2 is a schematic flow chart illustrating an information subscription method according to an exemplary embodiment;
FIG. 3 is a block diagram illustrating an information subscription device according to an exemplary embodiment;
FIG. 4 is a schematic block diagram illustrating an information subscription device according to an exemplary embodiment; and
FIG. 5 is a block diagram illustrating an information subscription device 800 according to an exemplary embodiment.

### DETAILED DESCRIPTION

Description will now be made in detail with respect to exemplary embodiments, examples of which are illustrated in the accompanying drawings. The following description refers to the accompanying drawings in which the same reference numbers in different drawings represent the same or similar elements unless otherwise specified. The implementations set forth in the following description of exemplary embodiments do not represent all implementations consistent with the present disclosure. Instead, they are merely examples of apparatuses and methods according to some aspects of the present disclosure as recited in the appended claims.

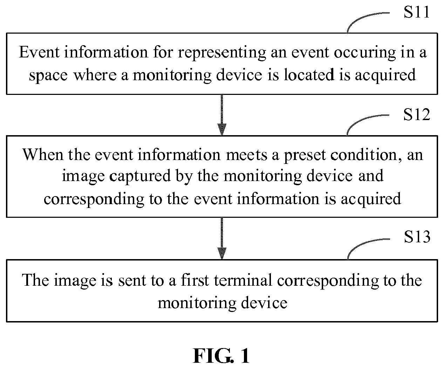

FIG. 1 is a flow chart illustrating an information subscription method, according to an exemplary embodiment. The method may be implemented by a terminal device such as a mobile phone, a tablet, a computer or a server, which is not limited in the present disclosure. As illustrated in FIG. 1, the method includes Steps S11 to S13.

In Step S11, event information for representing an event occurring in a space where a monitoring device is located is acquired. For example, the terminal device may acquire event information from one or more monitoring devices via a wireless communication. Each monitoring device may send the event information directly to the terminal device or indirectly via a smart hub or other device.

Here, the space where the monitoring device is located may refer to a capturing space region covered by the monitoring device. For example, the space may include one or the following: an indoor space such as a bedroom, a living room, a baby's room, and etc. The space may also include an outdoor space such as a front yard, a back yard, a rooftop, and etc. The event information may refer to a general description about the event, for example, "a person walks," "a door is opened," "a window is opened," "a curtain is withdrawn," "a television is turned on" or the like, which is not limited in the present disclosure.

In a possible implementation, the operation (Step S11) that the event information for representing the event occurring in the space where the monitoring device is located is acquired may include that first event information generated by an intelligent terminal device according to triggering of the event is acquired, and the first event information is determined as the event information.

Here, the intelligent terminal device may include a human body sensor, a door/window sensor, a curtain sensor, an intelligent television or the like, which is not limited in the present disclosure. The intelligent terminal device may generate the first event information according to triggering of the event. Here, the first event information may be event information without an event execution body. For example, the human body sensor may generate the first event information "a person walks" when it is detected that a person walks within a detection range. The door/window sensor may generate the first event information "a door or a window is opened" when it is detected that a door or window is opened. The curtain sensor may generate the first event information "a curtain is withdrawn" when it is detected that a curtain is withdrawn. The intelligent television may generate the first event information "a television is turned on" when it is detected that a television is turned on.

In a possible implementation, the terminal device establishes connections with the monitoring device and one or more of the human body sensor, the door/window sensor, the curtain sensor, the intelligent television and the like in a wireless connection manner. Here, the wireless connection manner may include infrared connection, Wireless-Fidelity (Wi-Fi) connection, Bluetooth (BT) connection, ZigBee connection or the like, which is not limited in the present disclosure.

In a possible implementation, the operation (Step S11) that the event information for representing the event occurring in the space where the monitoring device is located is acquired may include that the first event information generated by the intelligent terminal device according to triggering of the event is acquired; face recognition is performed on an image captured by the monitoring device, and an event execution body corresponding to the first event information is determined; and second event information is generated according to the first event information and the event execution body, and the second event information is determined as the event information. For example, the event classifier may be trained at least partially in the space where the monitoring device is installed during an initial time period. The initial time period may be first three days, first three weeks, or any duration selected by a user in for the specific monitoring device. Further, the pretrained event classifier may be updated monthly or bi-monthly with the latest user information, user pictures, pets pictures, or other information that changes over time.

In a possible implementation, a face(s) may be pre-stored into a face database. When the first event information generated by the intelligent terminal device according to triggering of the event is acquired, the terminal device extracts a face(s) from the image captured by the monitoring device, and compares an extracted face(s) with the face(s) stored in the face database to determine the event execution body corresponding to the first event information. For example, when the face extracted from the image belongs to the face database, an identifier for the face in the face database is determined as the event execution body, and otherwise the event execution body is determined as a stranger. The terminal device generates the second event information according to the first event information and the event execution body corresponding to the first event information. Here, the second event information may be event information including the event execution body.

It is to be noted that those skilled in the art may understand that the present disclosure is not intended to limit a face type stored in the face database corresponding to the monitoring device. For example, for a monitoring device used for a household, faces of family members may be pre-stored into a face database, and for a monitoring device used for a company, faces of staff may be pre-stored into a face database.

In a possible implementation, the operation (Step S11) that the event information for representing the event occurring in the space where the monitoring device is located is acquired may include that when a change in the image captured by the monitoring device is detected, the image is analyzed to obtain the event information according to a pretrained event classifier.

In a possible implementation, events are classified, and the event classifier is trained according to classified events. Here, the classified events may include that "a person walks," "a door is opened," "a window is opened," "a curtain is withdrawn," "a television is turned on" or the like, which is not limited in the present disclosure. Input of the event classifier may be an image (for example, a video, a picture or the like), and output of the event classifier may be the event information for representing the event occurring in the space where the monitoring device is located.

It is to be noted that those skilled in the art may understand that the event information output by the event classifier is event information without an event execution body. Furthermore, the terminal device may perform face recognition on the image captured by the monitoring device, determine a corresponding event execution body and accordingly generate event information including the event execution body, which is not limited in the present disclosure.

In Step S12, when the event information meets a preset condition, an image captured by the monitoring device and corresponding to the event information is acquired. The terminal device may acquire the captured image when determining that the event information meets the preset condition.

Here, the image may include a video, a picture or the like, which is not limited in the present disclosure.

In a possible implementation, the preset condition is that an information type corresponding to the event information is a preset information type. Accordingly, the terminal device may determine that the event information meets a preset condition when the information type corresponding to the event information is the same as the preset information type.

Here, the information type may be classification performed according to feature(s) of the event information. For example, the information type may include event information related to a door, event information related to a stranger or the like, which is not limited in the present disclosure. The preset information type may be an information type pre-subscribed by a user.

In a possible implementation, the preset condition is that a level type corresponding to the event information is equal to or greater than a preset level threshold value. For example, the level may indicate an alert level related to the event information. Accordingly, the terminal device may determine that the event information meets a preset condition when determining that the level type corresponding to the event information is equal to or greater than the preset level threshold value.

Here, the level type may be obtained by leveling according to feature(s) of the event information. For example, event information related to a window, a curtain or a television may be classified into a first level, event information related to a door may be classified into a second level, and event information related to a stranger may be classified into a third level, which is not limited in the present disclosure. The preset level threshold value may be a level threshold value preset by the user.

In Step S13, the image is sent to a first terminal corresponding to the monitoring device.

Here, the first terminal corresponding to the monitoring device may refer to a terminal device, such as a mobile phone, a tablet or a computer, associated with or bound to the monitoring device.

In a possible implementation, the terminal device may send the image to the first terminal corresponding to the monitoring device through a short message, a multimedia message or an instant messaging application. In some embodiments, depending on the level type of the event information, the terminal device may select multiple ways to send the image. For example, when the level type is highest (extremely urgent), the terminal device may send the image to the first terminal using all of the following: a short message, a multimedia message, an email, and an instant messaging application.

As an example of the embodiment, a user subscribes event information related to a door. The terminal device establishes connections with a monitoring device and a door/window sensor in a wireless connection manner. The door/window sensor generates the first event information "a door is opened" when it is detected that the door is opened. The door/window sensor sends the first event information "a door is opened" to the terminal device. When the first event information "a door is opened" is acquired by the terminal device, the terminal device determines that the information type corresponding to the event information is the preset information type since the event information "a door is opened" is event information related to the door, and the terminal device acquires an image captured by the monitoring device and corresponding to the event information "a door is opened," and sends the image to the first terminal corresponding to the monitoring device.

As an example of the embodiment, the user sets that the level threshold value is the second level. The terminal device establishes connections with the monitoring device and the door/window sensor in the wireless connection manner. The door/window sensor generates the first event information "a door is opened" when the door/window sensor has detected that the door is opened. The door/window sensor sends the first event information "a door is opened" to the terminal device. When the first event information "a door is opened" is acquired, the terminal device performs face recognition on the image captured by the monitoring device, and determines that the event execution body corresponding to the first event information "a door is opened" is a stranger. The terminal device generates second event information "a stranger opens a door". Since a level type corresponding to the event information "a stranger opens a door" is the third level, the level type corresponding to the event information is greater than the preset level threshold value. Thus, the terminal device acquires the image captured by the monitoring device and corresponding to the event information "a stranger opens a door," and sends the image to the first terminal corresponding to the monitoring device.

According to the information subscription method of the present disclosure, the image captured by the monitoring device may be sent to the first terminal corresponding to the monitoring device under the preset condition, so that the user may be timely and accurately informed so that the user can accurately know about the event occurring in the space where the monitoring device is located.

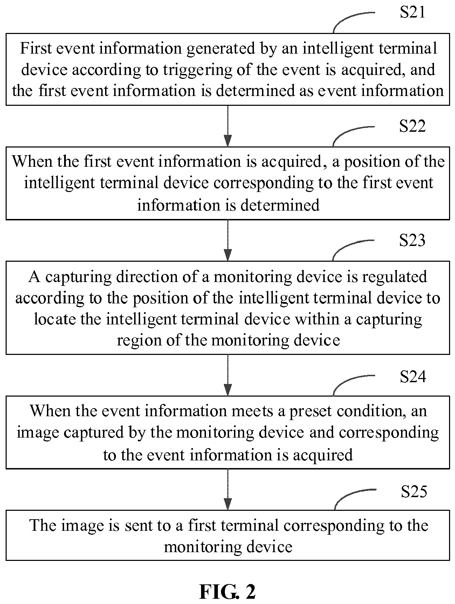

FIG. 2 is a schematic flow chart illustrating an information subscription method according to an exemplary embodiment. As illustrated in FIG. 2, the method includes Steps S21 to S25.

In Step S21, first event information generated by an intelligent terminal device according to triggering of the event is acquired, and the first event information is determined as event information.

In Step S22, when the first event information is acquired, a position of the intelligent terminal device corresponding to the first event information is determined.

In Step S23, a capturing direction of a monitoring device is regulated according to the position of the intelligent terminal device to locate the intelligent terminal device within a capturing region of the monitoring device.

In Step S24, when the event information meets a preset condition, an image captured by the monitoring device and corresponding to the event information is acquired.

In Step S25, the image is sent to a first terminal corresponding to the monitoring device.

In a possible implementation, the position of the intelligent terminal device may be set when a user mounts the intelligent terminal device. Furthermore, after occurrence of the event, the position of the intelligent terminal device may be intelligently identified by the monitoring device according to the captured video, which is not limited in the present disclosure.

It is to be noted that the present disclosure is not intended to limit a process of determining the position of the intelligent terminal device corresponding to the first event information. For example, when the first event information is acquired, a terminal device sends the first event information to the monitoring device, and the monitoring device determines the intelligent terminal device corresponding to the first event information and the position of the intelligent terminal device according to the first event information. As another example, when the first event information is acquired, the terminal device determines the intelligent terminal device corresponding to the first event information and the position of the intelligent terminal device according to the first event information. The terminal device sends the determined intelligent terminal device and position of the intelligent terminal device to the monitoring device. As another example, when the first event information is acquired, the terminal device determines the intelligent terminal device corresponding to the first event information and the position of the intelligent terminal device according to the first event information. The terminal device generates a control instruction for regulating the capturing direction of the monitoring device according to the position of the intelligent terminal device, and the terminal device sends the generated control instruction to the monitoring device.

In a possible implementation, the operation (Step S23) that the capturing direction of the monitoring device is regulated according to the position of the intelligent terminal device to locate the intelligent terminal device in the capturing region of the monitoring device may include that if the intelligent terminal device is located outside the current capturing region of the monitoring device, the capturing direction of the monitoring device is regulated to locate the intelligent terminal device in the capturing region of the monitoring device.

According to the information subscription method of the present disclosure, the capturing direction of the monitoring device may be regulated according to the position of the intelligent terminal device to locate the intelligent terminal device in the capturing region of the monitoring device, so that capturing purposiveness and pertinence of the monitoring device are improved.

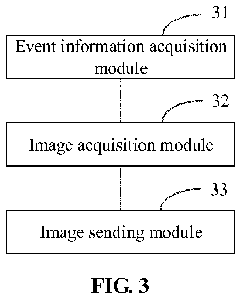

FIG. 3 is a block diagram illustrating an information subscription device according to an exemplary embodiment. Referring to FIG. 3, the device includes an event information acquisition module 31 configured to acquire event information for representing an event occurring in a space where a monitoring device is located, an image acquisition module 32 configured to, when the event information meets a preset condition, acquire an image captured by the monitoring device and corresponding to the event information, and an image sending module 33 configured to send the image to a first terminal corresponding to the monitoring device.

In a possible implementation, the preset condition is that an information type corresponding to the event information is a preset information type.

In a possible implementation, the preset condition is that a level type corresponding to the event information is equal to or greater than a preset level threshold value.

In a possible implementation, the event information acquisition module 31 is configured to acquire first event information generated by an intelligent terminal device according to triggering of the event, and determine the first event information as the event information.

In a possible implementation, the event information acquisition module 31 is configured to acquire the first event information generated by the intelligent terminal device according to triggering of the event, perform face recognition on the image captured by the monitoring device, and determine an event execution body corresponding to the first event information, and generate second event information according to the first event information and the event execution body, and determine the second event information as the event information.

In a possible implementation, the event information acquisition module 31 is configured to when a change in the image captured by the monitoring device is detected, analyze the image to obtain the event information according to a pretrained event classifier.

According to the information subscription device of the present disclosure, the image captured by the monitoring device may be sent to the first terminal corresponding to the monitoring device under the preset condition, so that a user may timely and accurately know about the event occurring in the space where the monitoring device is located.

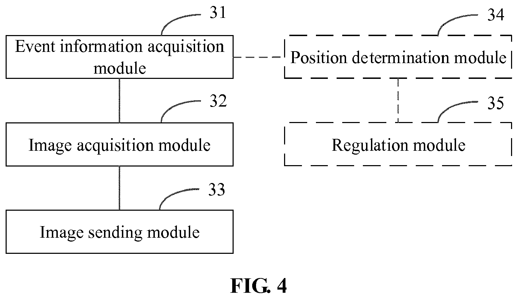

FIG. 4 is a schematic block diagram illustrating an information subscription device, according to an exemplary embodiment.

Referring to FIG. 4, in a possible implementation, the device further includes a position determination module 34 configured to, when the first event information is acquired, determine a position of the intelligent terminal device corresponding to the first event information, and a regulation module 35 configured to regulate a capturing orientation of the monitoring device according to the position of the intelligent terminal device to locate the intelligent terminal device within a capturing region of the monitoring device.

According to the information subscription device of the present disclosure, the capturing direction of the monitoring device may be regulated according to the position of the intelligent terminal device to locate the intelligent terminal device in the capturing region of the monitoring device, so that capturing purposiveness and pertinence of the monitoring device are improved.

With respect to the devices in the above embodiments, the specific manners for performing operations for individual modules therein have been described in detail in the embodiments regarding the methods, which will not be elaborated herein.

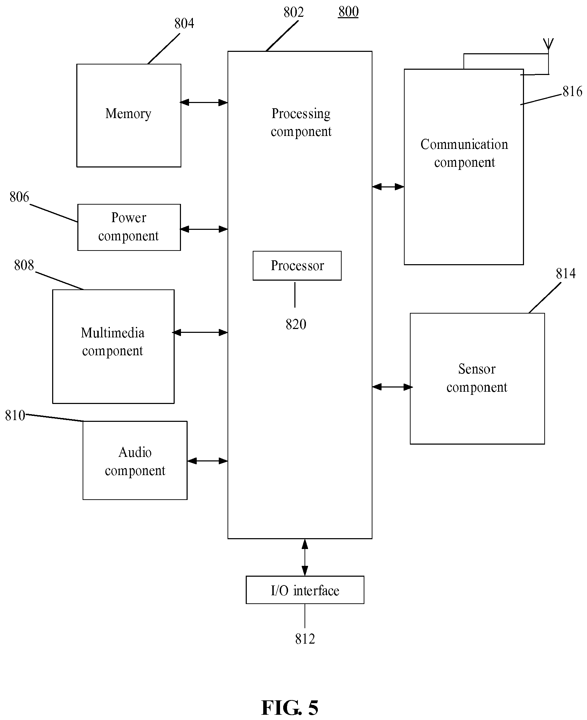

FIG. 5 is a block diagram illustrating an information subscription device 800 according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to FIG. 5, the device 800 may include one or more of a processing component 802, a memory 804, a power component 806, a multimedia component 808, an audio component 810, an Input/Output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the abovementioned method. Moreover, the processing component 802 may include one or more modules which facilitate interaction between the processing component 802 and the other components. For instance, the processing component 802 may include a multimedia module to facilitate interaction between the multimedia component 808 and the processing component 802.

The memory 804 is configured to store various types of data to support the operation of the device 800. Examples of such data include instructions for any application programs or methods operated on the device 800, contact data, phonebook data, messages, pictures, video, etc. The memory 804 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 806 provides power for various components of the device 800. The power component 806 may include a power management system, one or more power supplies, and other components associated with the generation, management and distribution of power for the device 800.

The multimedia component 808 includes a screen providing an output interface between the device 800 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a duration and pressure associated with the touch or swipe action. In some embodiments, the multimedia component 808 includes a front camera and/or a rear camera. The front camera and/or the rear camera may receive external multimedia data when the device 800 is in an operation mode, such as a photographing mode or a video mode. Each of the front camera and the rear camera may be a fixed optical lens system or have focusing and optical zooming capabilities.

The audio component 810 is configured to output and/or input an audio signal. For example, the audio component 810 includes a Microphone (MIC), and the MIC is configured to receive an external audio signal when the device 800 is in the operation mode, such as a call mode, a recording mode and a voice recognition mode. The received audio signal may be further stored in the memory 804 or sent through the communication component 816. In some embodiments, the audio component 810 further includes a speaker configured to output the audio signal.

The I/O interface 812 provides an interface between the processing component 802 and a peripheral interface module, and the peripheral interface module may be a keyboard, a click wheel, a button and the like. The button may include, but not limited to: a home button, a volume button, a starting button and a locking button.

The sensor component 814 includes one or more sensors configured to provide status assessment in various aspects for the device 800. For instance, the sensor component 814 may detect an on/off status of the device 800 and relative positioning of components, such as a display and small keyboard of the device 800, and the sensor component 814 may further detect a change in a position of the device 800 or a component of the device 800, presence or absence of contact between the user and the device 800, orientation or acceleration/deceleration of the device 800 and a change in temperature of the device 800. The sensor component 814 may include a proximity sensor configured to detect presence of an object nearby without any physical contact. The sensor component 814 may also include a light sensor, such as a Complementary Metal Oxide Semiconductor (CMOS) or Charge Coupled Device (CCD) image sensor, configured for use in an imaging application. In some embodiments, the sensor component 814 may also include an acceleration sensor, a gyroscope sensor, a magnetic sensor, a pressure sensor or a temperature sensor.

The communication component 816 is configured to facilitate wired or wireless communication between the device 800 and other equpment. The device 800 may access a communication-standard-based wireless network, such as a Wi-Fi network, a 2nd-Generation (2G) or 3rd-Generation (3G) network or a combination thereof. In an exemplary embodiment, the communication component 816 receives a broadcast signal or broadcast associated information from an external broadcast management system through a broadcast channel. In an exemplary embodiment, the communication component 816 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BT technology and another technology.

In an exemplary embodiment, the device 800 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components. The device 800 is configured to execute the abovementioned method using the one or more circuits. Each module or sub-module in this disclosure may be at least partially implemented using one or more circuits above.

In an exemplary embodiment, there is also provided a non-transitory computer-readable storage medium including an instruction, such as the memory 804 including an instruction, and the instruction may be executed by the processor 820 of the device 800 to implement the abovementioned method. For example, the non-transitory computer-readable storage medium may be a ROM, a Random Access Memory (RAM), a Compact Disc Read-Only Memory (CD-ROM), a magnetic tape, a floppy disc, optical data storage equipment and the like.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope of the present disclosure. It is intended that the scope of the present disclosure only be defined by the appended claims.

## Claims

1. An information subscription method, **characterized by** comprising:
acquiring (S11) event information for representing an event occurring in a space where a monitoring device is located;
when the event information meets a preset condition, acquiring (S12) an image captured by the monitoring device and corresponding to the event information; and
sending (S13) the image to a first terminal corresponding to the monitoring device.

2. The method of claim 1, wherein the preset condition is that an information type corresponding to the event information is a preset information type.

3. The method of claim 1, wherein the preset condition is that a level type corresponding to the event information is equal to or greater than a preset level threshold value.

4. The method of claim 1, wherein the acquiring event information for representing an event occurring in a space where a monitoring device is located comprises:
acquiring first event information generated by an intelligent terminal device according to triggering of the event, and determining the first event information as the event information.

5. The method of claim 1, wherein the acquiring event information for representing an event occurring in a space where a monitoring device is located comprises:
acquiring the first event information generated by an intelligent terminal device according to triggering of the event;
performing face recognition on the image captured by the monitoring device, and determining an event execution body corresponding to the first event information; and
generating second event information according to the first event information and the event execution body, and determining the second event information as the event information.

6. The method of claim 1, wherein the acquiring event information for representing an event occurring in a space where a monitoring device is located comprises:
when a change in the image captured by the monitoring device is detected, analyzing the image to obtain the event information according to a pretrained event classifier.

7. The method of claim 4, further comprising:
when the first event information is acquired, determining a position of the intelligent terminal device corresponding to the first event information; and
regulating a capturing orientation of the monitoring device according to the position of the intelligent terminal device to locate the intelligent terminal device within a capturing region of the monitoring device.

8. An information subscription device, **characterized by** comprising:
an event information acquisition module (31) configured to acquire event information for representing an event occurring in a space where a monitoring device is located;
an image acquisition module (32) configured to, when the event information meets a preset condition, acquire an image captured by the monitoring device and corresponding to the event information; and
an image sending module (33) configured to send the image to a first terminal corresponding to the monitoring device.

9. The device of claim 8, wherein the preset condition is that an information type corresponding to the event information is a preset information type.

10. The method of claim 8, wherein the preset condition is that a level type corresponding to the event information is equal to or greater than a preset level threshold value.

11. The device of claim 8, wherein the event information acquisition module is configured to:
acquire first event information generated by an intelligent terminal device according to triggering of the event, and determine the first event information as the event information,
wherein the device further comprises:
a position determination module (34) configured to, when the first event information is acquired, determine a position of the intelligent terminal device corresponding to the first event information; and
a regulation module (35) configured to regulate a capturing orientation of the monitoring device according to the position of the intelligent terminal device to locate the intelligent terminal device within a capturing region of the monitoring device.

12. The device of claim 8, wherein the event information acquisition module (31) is configured to: acquire the first event information generated by an intelligent terminal device according to triggering of the event; perform face recognition on the image captured by the monitoring device, and determine an event execution body corresponding to the first event information; and generate second event information according to the first event information and the event execution body, and determine the second event information as the event information,
or wherein the event information acquisition module (31) is configured to when a change in the image captured by the monitoring device is detected, analyze the image to obtain the event information according to a pretrained event classifier.

13. An information subscription device, comprising:
a processor; and
a memory configured to store instructions executable for the processor, wherein the processor is configured to execute the method of any one of claims 1-7.

14. A computer program including instructions for executing the method according to any one of claims 1 to 7 when said program is executed by a computer.

15. A recording medium readable by a computer and having recorded thereon a computer program including instructions for executing the method according to any one of claims 1 to 7.
